# EUROPEAN PATENT APPLICATION

(11) **EP 3 095 991 A1**
(43) Date of publication of application: **23.11.2016**
(21) Application number: 16176021.0
(22) Date of filing: 28.09.2012
(51) Int. Cl.: F02D 9/06, F02D 9/16, F02D 9/10, F02M 26/67, F02M 26/70, F02M 26/72, F16K 5/06, F16K 41/02

(54) **VALVE**

(30) Priority: 30.09.2011 GB 201116858
(62) Divisional of application: 12186687.5
(71) Applicant: GT Group Limited, Whitehouse Business Park Peterlee County Durham SR8 2RU (GB)
(72) Inventor: ROWE, Ellis, Peterlee, Durham SR8 2RU (GB); PENNICK, Nigel, Peterlee, Durham SR8 2RU (GB)
(74) Representative: McWilliams, David John

(57) **Abstract**

An exhaust control valve comprising a valve body defining a fluid flow path through the exhaust control valve. A valve member for controlling fluid flow rate along the fluid flow path is rotatably connected to the valve body. A drive member extends into in the valve body and is provided for moving the valve member relative to the valve body. A mechanical seal is provided for limiting fluid leakage from the fluid flow path out of the valve body along a clearance gap adjacent the drive member.

## Description

### FIELD OF THE INVENTION

The present invention relates to a valve and/or a valve assembly, in particular, but not exclusively, an exhaust control valve assembly for use on commercial road vehicles such as trucks.

### BACKGROUND OF THE INVENTION

Exhaust control valves are used in exhaust systems to improve the emissions from road vehicles. Examples of exhaust control valves include exhaust gas recirculation valves, exhaust brakes, and thermal management valves.

An exhaust gas recirculation (EGR) valve is used for passing a proportion of an exhaust gas through a cooler and re-circulating it back into a combustion chamber. This recirculation lowers the combustion temperature which in turn reduces the NOX and diesel particulate emissions. Exhaust brakes assist the retardation of vehicles by controlling engine exhaust back pressure. Thermal management valves are used to meter the pressure and temperature of an exhaust stream where active or passive regeneration is required to reduce particulate matter and diesel emissions. The exhaust gas recirculation valves, exhaust brakes, or thermal management valves are positioned in an exhaust path.

The above-mentioned valves are of the type generally referred to as "in line valves". An "in line valve" refers to any valve that is used to control either the pressure or flow through a pipeline or between an inlet and outlet port. This can be, for example, a butterfly flap valve or ball valve.

Such valves are generally operated by "external actuation". External actuation refers to the movement of the valve being controlled from outside of a valve body or pipeline within which the valve is positioned. An example of a method of external actuation includes a spindle connected to a valve member and extending out through the body of the valve. An actuation device is positioned external to the body of the valve, and is operative to move the spindle and therefore the valve member, so as to control fluid flow.

Typically, a gap is present between the spindle and the valve body, for example between the spindle and a bush of the valve body, so as to not impede rotation of the spindle relative the valve body. Fluid flow through the valve can disadvantageously leak from the valve through the gap between the spindle and the bush. To prevent this from happening, it is known to provide an elastomeric seal to seal between the spindle and the bush.

In an exhaust path, typical operating temperatures will be in the region 550°C, but may rise to approximately 800°C to 850°C. Further, in some countries it is possible that the valve temperature at engine start up may be as low as -40°C. Hence, exhaust control valves need to be able to operate in the wide temperature range of -40°C to 850°C. This wide temperature range and extremes of temperatures can be problematic for the majority of elastomeric seals.

In line valves are also used in many other applications not related to exhaust systems and/or to road vehicles. In some of these applications, the hostile nature of the fluid being transported through the valve may mean that elastomeric seals are not suitable, e.g. when the fluid is corrosive to an extent that is incompatible with the normal range of elastomeric seals.

GB928557 discloses an exhaust brake valve comprising a disc through a bore in which passes a spindle, the housing having a groove facilitating introduction of the disc which has recesses in which fit sealing rings.

### SUMMARY OF THE INVENTION

Accordingly, a first aspect of the invention provides a valve assembly comprising: a valve body defining a fluid flow path through the valve assembly; a valve member for controlling fluid flow rate along the fluid flow path, the valve member being moveably mounted within the valve body; a drive member for moving the valve member relative to the valve body, wherein the drive member extends into the valve body; and a mechanical seal provided for limiting fluid leakage from the fluid flow path out of the valve body along a clearance gap adjacent the drive member.

The provision of a mechanical seal provides an alternative sealing arrangement for limiting fluid leakage from the valve assembly. Advantageously, providing a mechanical seal instead of an elastomeric seal means that the valve assembly can be used in more hostile environments than valve assemblies of the prior art and/or have improved sealing and life compared to elastomeric seals of the prior art when used in a hostile environment.

The valve body may comprise an aperture. A locator may be positioned in the aperture. The drive member may extend through the locator. The valve member may comprise a recess. An end of the locator may extend into the recess. The mechanical seal may be positioned in the recess. The provision of a recess within which the locator extends creates a restricted flow path, and a flow path that changes direction, so as to reduce fluid leaking from the fluid flow path to a position of the mechanical seal.

The locator may be a bush. The drive member may extend through the bush. The valve member may comprise a recess within which the bush is partially located. The mechanical seal may comprise a spring biased element located between the bush and a base of the recess so as to form a barrier to fluid leakage from the fluid flow path to a clearance gap between the drive member and the bush.

The valve member and valve body may be arranged to define a labyrinth seal for limiting fluid leakage from the fluid flow path. A labyrinth seal is a seal that is configured to have a tortuous path to limit fluid flow therethrough. The formation of the labyrinth seal further limits fluid leakage from the fluid flow path along a clearance gap between the drive member and the aperture. The labyrinth seal may be constructed so that fluid leakage is directed along a stepped flow path, e.g. the flow path may include one or more right angles.

The mechanical seal may comprise a non-elastomeric spring, for example a metallic spring. A spring advantageously uses spring bias to maintain a connection between the valve body and the valve member, during use, for improved sealing.

The spring may be a disc spring for creating a barrier to restrict fluid leakage from the fluid flow path. Disc springs are known in static applications, for example when the components to be sealed are not moving relative to each other. The inventors of the present invention have taken the innovative step of using a disc spring in the dynamic application of sealing between a valve member that moves relative to a valve body.

The disc spring may be an annular disc spring. The annular disc spring may be positioned to surround the drive member. As well as providing a mechanical seal, the use of a disc spring is further advantageous because it can also be used to aid desired location of the valve member with respect to the valve body. Good location of the valve member with respect to the valve body reduces wear between the valve member and the valve body.

The disc spring may be arranged to provide a line contact with surfaces adjacent the disc spring, which creates a barrier to fluid leakage from the fluid flow path. The surfaces adjacent the disc spring may be the valve body and the valve member, or one or more washers that may be positioned adjacent to and substantially coaxially with the disc spring. The disc spring may be pre-tensioned during assembly of the valve to maintain contact with said surfaces. That is, in the case of an exhaust control valve, contact can be maintained at all operating temperatures of the valve, which can vary from -40°C and 850°C.

The mechanical seal may comprise one or more washers for providing a seat for the disc spring. The washers may be provided for a disc spring to be able to move on when the valve member is moved relative to the valve body. The washers provide an improved surface for the mechanical seal to run on, which reduces wear.

The one or more washers may be annular washers. The one or more washers may be positioned to extend around a drive member. The use of one or more washers further improves the location of the valve member with respect to the valve body. The one or more washers may be coated and/or treated to resist, for example high temperature and/or the corrosive nature of the fluid flowing through the valve. The washers may be hardened washers.

The one or more washers may be substantially coaxially aligned with the disc spring. The one or more washers may be positioned between the valve member and the valve body. In exemplary embodiments, the one or more washers may be positioned in a recess formed in the valve member. Additionally or alternatively, the one or more washers may be between the disc spring and the valve body or a further washer or disc spring. The one or more washers may be supported in position by a locator, for example flats or tabs, to limit rotation of the washers with the valve member.

The valve may comprise a plurality of disc springs. The plurality of disc springs may be stacked between the valve body and the valve member. In exemplary embodiments, the disc springs may be stacked with one or more washers interspaced between the disc springs.

A bush may be positioned in the aperture of the valve body. The drive member may be a spindle. The disc spring may be positioned between the bush and the valve member.

The bush may be an interference fit to the valve body.

The valve member may comprise a recess. The bush may be partially located within the recess. The disc spring may be located in the recess so as to be positioned between a base of the recess and the bush. The recess may have an inner wall substantially parallel to at least a portion of an outer wall of the bush. The inner wall of the recess may be closely dimensioned to the outer wall of the bush so that a gap formed between the bush and the recess is configured to restrict fluid leakage from the fluid flow path to the disc spring. Such a configuration means that for fluid to leak from the valve, fluid flow in the valve needs to first flow over a step created by the recess. The fluid flow then needs to change direction to flow along the narrow gap formed between the recess and the bush. The narrowness of the path created between the recess and bush restricts fluid flow therethrough, and the change in direction of fluid flow required to travel through the gap and then to the position of the disc spring further reduces fluid flow therethrough.

The valve member may be rotatably mounted within the valve body.

The valve member may be a butterfly flap (for example a disc shaped flap) or a ball having a hole therethrough.

The valve assembly may comprise an actuator and a lever. The lever may be connected between the actuator and the valve member. The connection between the actuator and the valve member may be configured so as to, in use, convert linear motion of the actuator to rotary motion of the valve member. The actuator may be positioned offset from a central axis of the valve member.

The actuator may be an electronic, hydraulic or pneumatic actuator.

The valve assembly may be an exhaust control valve assembly. An exhaust control valve assembly is a valve assembly for controlling emissions from an exhaust and includes exhaust path valves (i.e. valves positioned in an exhaust path to control fluid flow therein) and engine inlet valves (i.e. valves positioned to control the flow of air to an engine so as to control the emissions from the engine and into the exhaust path). The exhaust control valve may be an exhaust brake, an exhaust gas recirculation valve, a thermal management valve, or an air throttle valve. An air throttle valve is used to control air flow into an engine, which has the effect of reducing emissions through the exhaust path and from the vehicle.

A second aspect of the invention provides an exhaust control valve assembly comprising: a valve body defining a fluid flow path through the exhaust control valve assembly; a valve member for controlling fluid flow rate along the fluid flow path, the valve member being moveably mounted within the valve body; a drive member for moving the valve member relative to the valve body, wherein the drive member extends into the valve body; and a mechanical seal provided for limiting fluid leakage from the fluid flow path out of the valve body along a clearance gap adjacent the drive member.

The exhaust control valve assembly of the second aspect may have any one, or any combination, of the optional features of the valve assembly of the first aspect.

A third aspect of the invention provides a valve having: a valve body defining a fluid flow path through the valve; a valve member for controlling fluid flow rate along the fluid flow path, the valve member being moveably mounted within the valve body; and a mechanical seal located between the valve body and the valve member for limiting fluid leakage from the fluid flow path.

The valve of the third aspect may be a valve of the assembly of the first or second aspects.

### BRIEF DESCRIPTION OF THE DRAWINGS

Embodiments of the invention will now be described with reference to the accompanying drawings, in which:
Figure 1 shows a side view of an exhaust brake;
Figure 2 shows a cross section through a butterfly valve assembly in a closed position;
Figure 3 shows a cross section through the butterfly valve assembly of Figure 2 in an open position;
Figure 4 shows a cross section through an alternative butterfly valve assembly in an open position;
Figure 5 shows a cross section through a ball valve assembly in an open position; and
Figure 6 shows a cross section through the ball valve assembly of Figure 5 in a closed position.

### DETAILED DESCRIPTION OF EMBODIMENT(S)

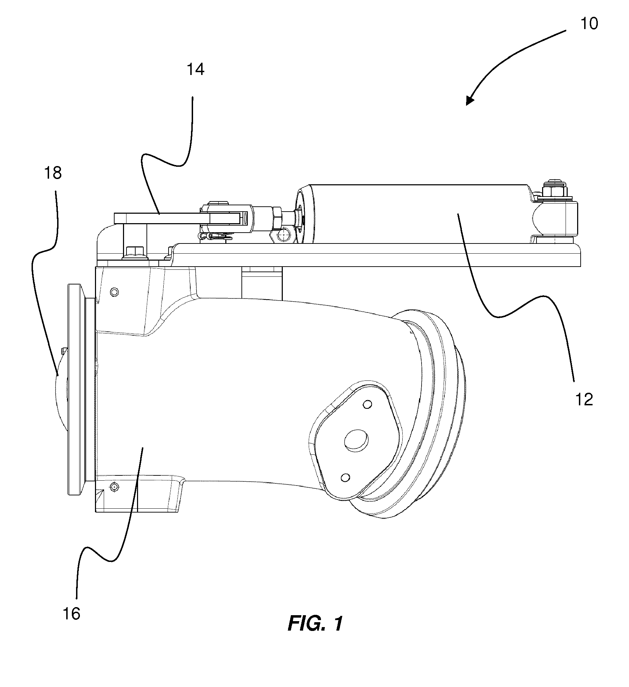

Referring to Figure 1, an exhaust brake assembly is shown generally at 10.

The exhaust brake assembly 10 has a valve body 16 that defines a fluid flow path through the valve. A valve member 18 is located within the valve body 16 for controlling flow rate of fluid along the fluid flow path. An actuator 12 and a connected lever 14 are mounted external to the valve body 16. The valve member 18 is connected to the lever 14, and the connection between the valve member 18, lever 14 and actuator 12 is configured such that linear motion of the actuator causes rotary motion of the valve member 18.

Various valve members and arrangements of the valve member and valve body are envisaged, and examples will now be discussed in more detail. In each of the described embodiments, the same reference numerals are used for similar features, but a different prefix is used to distinguish between embodiments. Only the differences between embodiments will be described in detail.

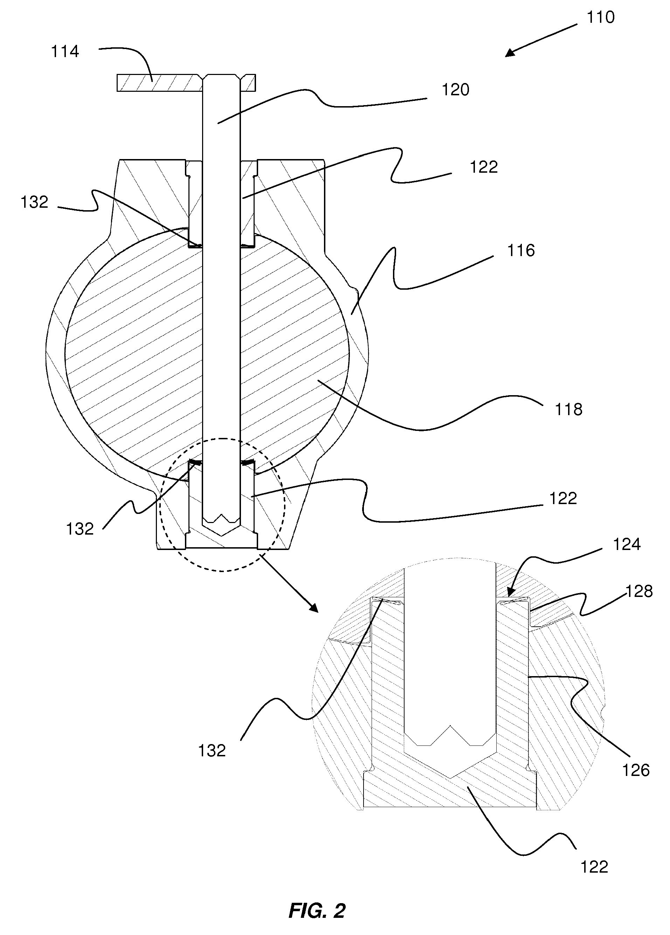

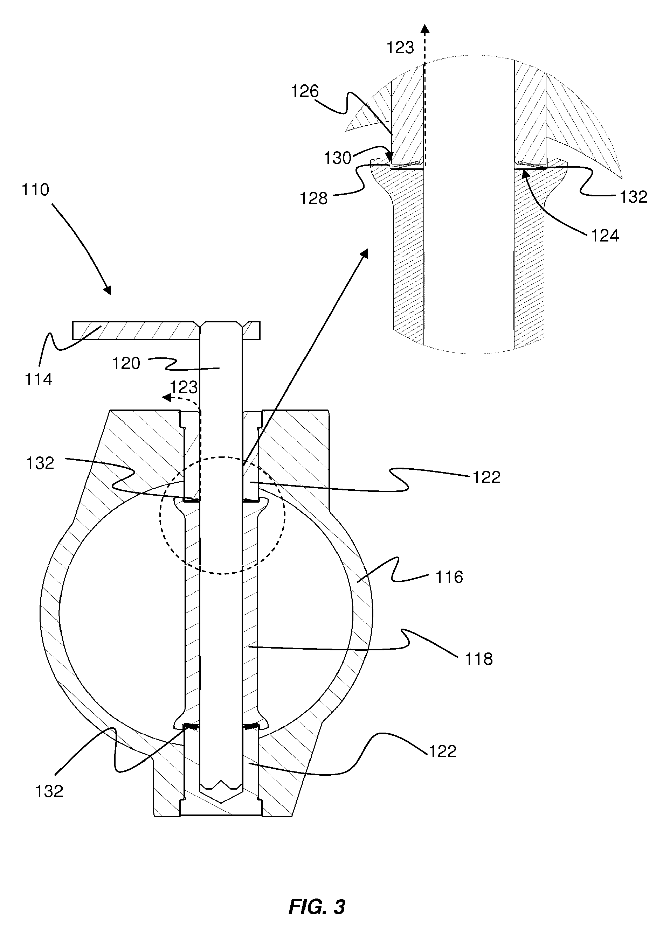

Referring to Figures 2 and 3, the valve body 116 defines a substantially circular channel for fluid to flow along. The valve member 118 is a disc shaped butterfly flap of circular cross section and has a similar diameter to the channel of the valve body 116.

The valve member 118 is rotatable relative to the valve body 116 between a closed position (illustrated in Figure 2) and an open position (illustrated in Figure 3).

A spindle 120 is connected to the lever 114 and to the valve member 118. A bush 122 is positioned in an aperture of the valve body at opposing ends of the valve body 116. The bush is a press interference fit with the valve body 116. The bush 122 serves to locate the spindle 120 in position with respect to the valve body 116. The spindle 120 passes through each bush 122 and the valve member 118. A running clearance is provided between the spindle 120 and the bush 122 so as to permit the spindle 120 (and the connected valve member 118) to rotate substantially unhindered by the bush 122 when actuated by the actuator and lever 114.

The running clearance between the spindle 120 and the bush 122 provides a path (illustrated by arrow 123) through which fluid flow from the fluid flow path may leak.

To reduce fluid leakage through the clearance between the spindle 120 and the bush 122, a mechanical seal is provided. In this embodiment the mechanical seal is a disc spring 132. The disc spring 132 is positioned between the bush 122 and the valve member 118. The disc spring 132 is annular and positioned substantially concentric to the spindle 120 so as to surround the spindle. The disc spring 132 is pre-tensioned during assembly to remain in contact with the bush 122 and the valve member 118 during use of the exhaust brake 110. The disc spring may typically be manufactured from a nickel-chromium-cobalt alloy, for example Nimonic 90.

Contact of the disc spring 132 with the valve member 118 and the bush 122 means that, once fluid has reached a region at the base of the recess 124, the fluid is substantially prevented from flowing towards the clearance gap between the spindle 120 and the bush 122 because of the physical barrier created by the disc spring 132. Fluid leakage through the clearance between the spindle 120 and the bush 122 is further limited by configuring the valve member 118 and the bush 122 to form a labyrinth seal, as will now be explained.

A recess 124 is provided in the valve member 118 at opposing ends of the valve member. As can be seen from a comparison of Figures 2 and 3, the depth of the recess can be varied as required. The bush 122 is partially located within the recess 124, such that the disc spring is located between a base of the recess 124 and an end of the bush 122 and is in contact therewith. An outer wall 126 of the bush is substantially parallel to the inner wall 128 of the valve member 118. A clearance gap 130 is provided between the inner wall 128 of the recess and the outer wall 126 of the bush to permit the valve member 118 to rotate relative to the bush 122. However, the width of the clearance gap is kept to a minimum to reduce fluid leakage along the clearance gap.

The labyrinth seal formed by the recess 124 and the bush 122 means that to leak from the fluid flow, fluid must first flow over a step created by the recess 124. The fluid then must change direction through substantially 90° and flow along the clearance gap 130. A further change in direction through substantially 90° is required to flow along an end of the bush 122 so as to reach an internal wall of the bush adjacent the spindle 120. The fluid then needs to have a further change in direction through substantially 90° to flow along the clearance gap between the spindle 120 and the bush 122. The narrow nature of the clearance gaps, and the need for the fluid to regularly change direction restricts flow from the fluid flow path to the an external region of the valve.

In use, the actuator and lever 114 are used to rotate the spindle 120, which in turn rotates the valve member 118. Rotation of the valve member 118 alters the cross sectional area of a flow path defined by the valve body 116, so as to alter the flow rate therethrough. The minimum area is shown in Figure 2 and results in substantially no fluid flow through the valve (except for leakage at the sides of the valve member). In Figure 2, the valve member 118 (i.e. the disc shaped flap) is positioned so as to cover the flow path through the valve body 116. The maximum area is shown in Figure 3, where the valve is fully open. When the valve is fully open the valve member 118 (i.e. the disc shaped flap) is rotated through approximately 90° to the closed position.

Advantageously, the mechanical seal formed by the disc spring 132 can withstand the high temperatures associated with exhaust gases. Further, the disc spring 132 can have improved longevity in many applications, including those in corrosive environments. The labyrinth seal formed by the recess 124 and the bush 122 further improves the seal between the valve member 118 and the bush 122.

The use of an annular disc spring 132 means that the valve member 118 is located substantially symmetrically between the bushes 122 within the bore of the main valve. This means that wear between an inner surface of the valve body 116 and the valve member 118 is reduced.

In an alternative embodiment multiple disc springs may be used. In such embodiments, the disc springs may be stacked one on top of the other.

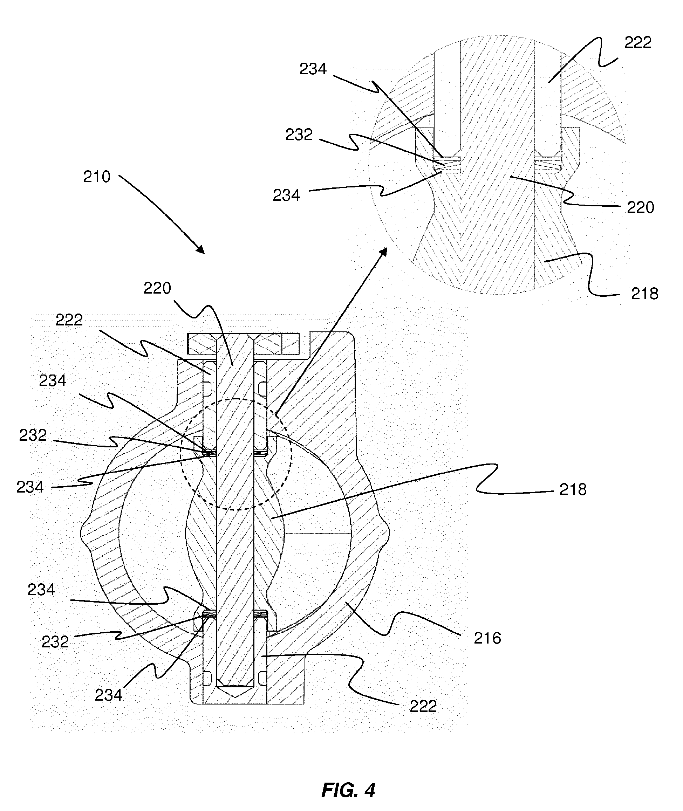

Referring to Figure 4 an alternative embodiment is shown. In this embodiment, two washers 234 are positioned coaxially with the disc spring 232, one on each side of the disc spring 232. The washers 234 are annular so as to extend around the spindle 220. The washers 234 improve the location of the valve member 218 with respect to the bushes 222 which reduces wear between the valve member 218 and valve body 216. The washers also provide an improved running surface for the disc spring 232.

When washers 234 are used, the disc spring 232 is located such that the disc spring 232 remains in contact with the washers 232 by means of a pre-tension applied during assembly, to prevent the flow of fluid reaching the clearance gap between the spindle 220 and the bushes 222.

The washers 234 may be hardened washers. The washers 234 may be hardened by means of the material from which they are manufactured, and/or a coating applied to the washers, and/or as a result of a heat treatment applied to the washers. In the present embodiment one of the washers 234 abuts against a flat surface of the base of the recess 224 and the other washer 234 abuts against an end surface of the bush 222. However, in alternative embodiments, the washers 232 may be located using flats or tabs to prevent them from rotating with the spindle 220 as the valve is actuated.

In an alternative embodiment, multiple washers and disc springs may be used. In such embodiments, the disc springs may be stacked and the washers interspaced therebetween.

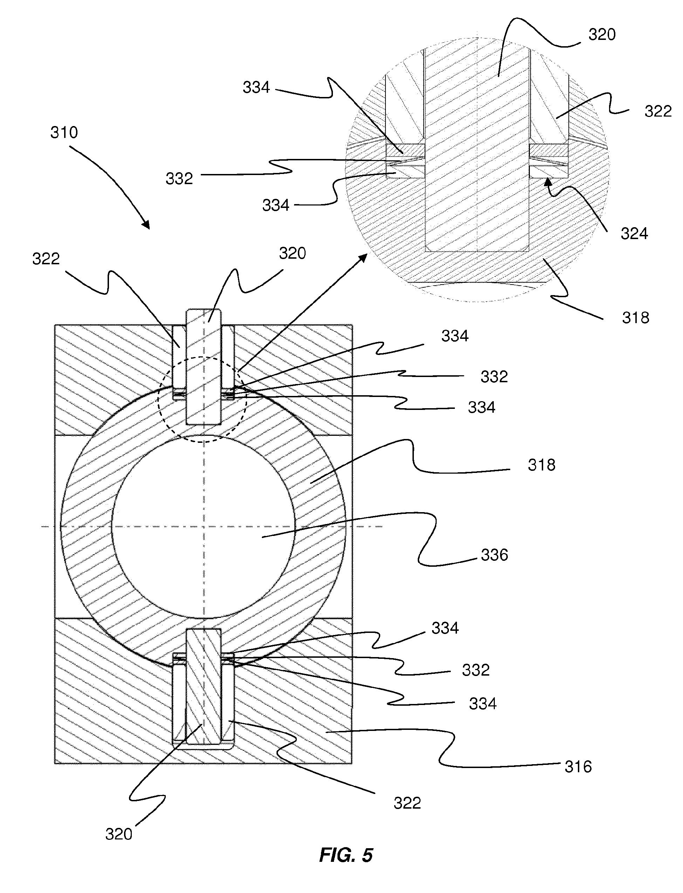

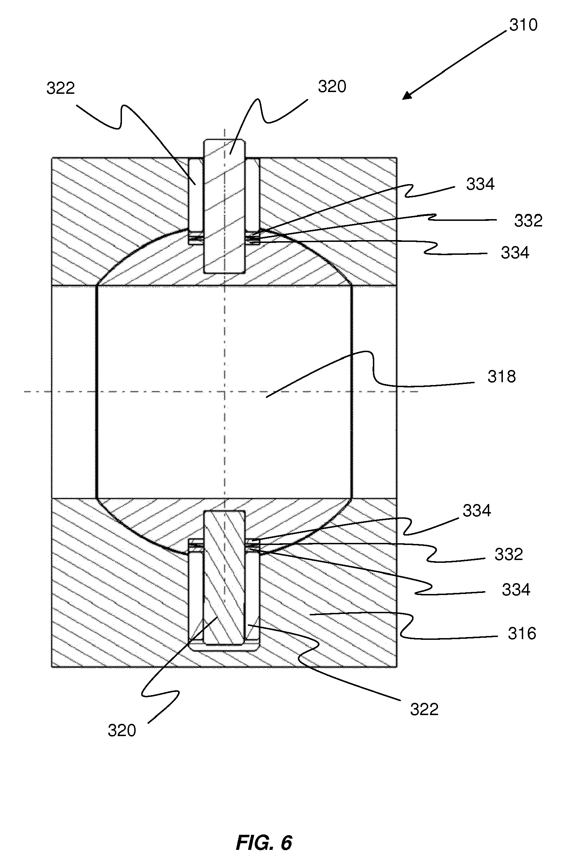

A further embodiment is shown in Figures 5 and 6. In this embodiment, the valve member 318 is a ball. The ball has a hole 336 extending therethrough. In an open position the ball is rotated so that the hole 336 is substantially concentric with the flow path defined by the valve body 316, as shown in Figure 5. In a closed position, the ball is rotated so that an axial length of the hole 336 is substantially perpendicular to the fluid flow path, so as to restrict flow along the fluid flow path, as shown in Figure 6.

In this embodiment instead of providing a single spindle that extends through the valve member, two separate spindles 320 are provided. One of the spindles 320 extends through one of the bushes 322 and extends partially within the valve member 318 for connection thereto, and the other spindle 320 extends through the other bush 322 and extends partially within the valve member 318 for connection thereto.

In the described embodiments two opposing bushes are provided. However, in alternative embodiments only one bush may be provided. In such embodiments, the spindle may not extend through the valve member. In yet a further embodiment the bush may be statically fixed to the valve body using a means other than an interference fit, for example an adhesive may be used.

In further alternative embodiments the inner wall of the recess and the outer wall of the bush may be stepped or include one or more complimentary ridges and channels, so as to increase the number of times leakage flow must change direction to exit from the valve assembly.

Although the invention has been described above with reference to one or more preferred embodiments, it will be appreciated that various changes or modifications may be made without departing from the scope of the invention as defined in the appended claims. For example, the valve assembly may not be an exhaust control valve, but any type of valve assembly, particularly a valve used in hostile conditions, e.g. an exhaust gas recirculation valve, thermal management valve, or air throttle valve. In each of these alternatives, the valve assembly may comprise, the features described herein, including a valve body defining a fluid flow path through the valve assembly; a valve member for controlling fluid flow rate along the fluid flow path, the valve member being moveably mounted within the valve body; a drive member for moving the valve member relative to the valve body, wherein the drive member extends into the valve body; and a mechanical seal provided for limiting fluid leakage from the fluid flow path out of the valve body along a clearance gap adjacent the drive member. The fluid flow in the described embodiments is a gaseous flow, but in alternative embodiments the fluid may be a liquid.

## Claims

1. A valve assembly (10) comprising:
a valve body (16, 116, 216, 316) defining a fluid flow path through the valve assembly;
a valve member (18, 118, 218, 318) for controlling fluid flow rate along the fluid flow path, the valve member being moveably mounted within the valve body (16, 116, 216, 316);
a drive member for moving the valve member (18, 118, 218, 318) relative to the valve body (16, 116, 216, 316), wherein the drive member extends into the valve body; and
a mechanical seal (132, 232) provided for limiting fluid leakage from the fluid flow path out of the valve body (16, 116, 216, 316) along a clearance gap adjacent the drive member,
**characterised in that** the valve member (18, 118, 218, 318) and valve body (16, 116, 216, 316) are arranged to define a labyrinth seal for limiting fluid leakage from the fluid flow path.

2. The assembly according to claim 1, comprising a locator positioned in an aperture of the valve body (16, 116, 216, 316) and the drive member extends through the locator, and wherein the valve member (18, 118, 218, 318) comprises a recess (124) and an end of the locator extends into the recess (124), and wherein the mechanical seal (132, 232) is positioned in the recess (124),.

3. The assembly according to claim 2, wherein the mechanical seal comprises a spring biased element, and wherein the locator is a bush (122, 222, 322) and the spring biased element is located between the bush (122, 222, 322) and a base of the recess (124), so as to form a barrier to fluid leakage from the fluid flow path to a clearance gap between the drive member and the bush (122, 222, 322).

4. The assembly (10) according to claim 2, wherein the labyrinth seal is constructed so that any fluid leakage is directed along a stepped flow path.

5. The assembly (10) according to any one of the previous claims, wherein the mechanical seal comprises a disc spring (132, 232) for creating a barrier to restrict fluid leakage from the fluid flow path.

6. The assembly (10) according to claim 4, wherein the drive member comprises an elongate member extending through the aperture and the disc spring (132, 232) is annular to the elongate member.

7. The assembly (10) according to claim 4 or 5, wherein the mechanical seal comprises one or more washers (234) for providing a seat for the disc spring (132, 232) to be able to move on when the valve member (18, 118, 218, 318) is moved relative to the valve body (16, 116, 216, 316).

8. The assembly (10) according to any one of the claims 4 to 6, wherein a bush (122, 222, 322) is positioned in the aperture of the valve body (16, 116, 216, 316), and the drive member is a spindle (120, 220, 320), and wherein the disc spring (132, 232) is annular to said spindle and is positioned between the bush (122, 222, 322) and the valve member (18, 118, 218, 318).

9. The assembly (10) according to claim 7, wherein the valve member (18, 118, 218, 318) comprises a recess (124) within which the bush (122, 222, 322) is partially located, and wherein the disc spring (132, 232) is located in the recess (124) so as to be positioned between a base of the recess (124) and the bush (122, 222, 322).

10. The assembly (10) according to claim 8, wherein the recess (124) has an inner wall (128) substantially parallel to at least a portion of an outer wall (126) of the bush (122, 222, 322), and the inner wall (128) of the recess (124) is closely dimensioned to the outer wall (126) of the bush (122, 222, 322) so that a gap formed between the bush (122, 222, 322) and the recess (124) is configured to restrict fluid leakage from the fluid flow path to the disc spring (132, 232).

11. The assembly (10) according to any one of the previous claims, wherein the valve member (18, 118, 218, 318) is rotatably mounted in the valve body (16, 116, 216, 316).

12. The assembly (10) according to claim 10, wherein the valve member (18, 118, 218, 318) is a butterfly flap or a ball.

13. The assembly (10) according to any one of the previous claims comprising an actuator (12) and a lever (14, 114), wherein the lever is connected between the actuator and the valve member (18, 118, 218, 318) so as to, in use, convert linear motion of the actuator to rotary motion of the valve member.

14. The assembly (10) according to any one of the previous claims, wherein the assembly is an exhaust brake (110), an exhaust gas recirculation valve, a thermal management valve, or an air throttle valve.

15. A valve assembly (10) comprising:
a valve body (16, 116, 216, 316) defining a fluid flow path through the valve assembly;
a valve member (18, 118, 218, 318) for controlling fluid flow rate along the fluid flow path, the valve member being moveably mounted within the valve body (16, 116, 216, 316);
a drive member for moving the valve member (18, 118, 218, 318) relative to the valve body (16, 116, 216, 316), wherein the drive member extends into the valve body; and
a mechanical seal (132, 232) provided for limiting fluid leakage from the fluid flow path out of the valve body (16, 116, 216, 316) along a clearance gap adjacent the drive member,
**characterised in that** the valve member (18, 118, 218, 318) and valve body (16, 116, 216, 316) are arranged to define a labyrinth seal for limiting fluid leakage from the fluid flow path,
wherein the mechanical seal comprises a disc spring (132, 232) for creating a barrier to restrict fluid leakage from the fluid flow path.
